**Europäisches Patentamt**

**European Patent Office**

**Office européen des brevets**

(11) Veröffentlichungsnummer: **0 132 723**
**A2**

## (12) EUROPÄISCHE PATENTANMELDUNG

(21) Anmeldenummer: **84108254.8**

(22) Anmeldetag: **13.07.84**

(51) Int. Cl.⁴: **F 24 F 3/00**
**F 24 F 7/04, F 24 D 3/00**
**F 24 D 5/04**

(30) Priorität: **29.07.83 DE 3327459**
**23.08.83 DE 3330394**

(43) Veröffentlichungstag der Anmeldung:
**13.02.85 Patentblatt 85/7**

(84) Benannte Vertragsstaaten:
**AT BE CH DE FR GB IT LI LU NL SE**

(71) Anmelder: **Josef Gartner & Co.**
**Postfach 20/40**
**D-8883 Gundelfingen(DE)**

(72) Erfinder: **Papak, Viktor**
**Am Beulardstein 14**
**D-5100 Aachen(DE)**

(74) Vertreter: **Patentanwälte Müller-Boré, Deufel, Schön,**
**Hertel, Lewald, Otto**
**Postfach 26 02 47 Isartorplatz 6**
**D-8000 München 26(DE)**

(54) Vorrichtung zum Temperieren von Räumen eines Gebäudes.

(57) Um bei einer aus Hohlstützen (10, 12) und Hohlriegeln (18, 20) bestehenden Fassade auf eine aufwendige Klimaanlage verzichten zu können, ist uinter einem Brüstungsriegel (46) ein Querstromgebläse (38) angeordnet. Über dem Querstromgebläse (38) ist entweder ein Sternrippenrohr vorgesehen oder der Brüstungsriegel ist mehrteilig aufgebaut und mit Lamellen versehen, so daß die durch das Querstromgebläse (38) angesaugte Luft über dem Gebläse vorgekühlt bzw. vorgewärmt werden kann, bevor sie entweder durch den Brüstungsriegel (46) oder seitlich an den Hohlstützen (10, 12) oder von oben aus dem Sturzriegel (18) zurück an den Raum gegeben werden kann. Unterhalb des Querstromgebläses kann ein Filter vorgesehen sein, damit keine gesundheitsschädigende Staubund Bakterienumwälzung erfolgt.

FIG.2

EP 0 132 723 A2

Beschreibung

Die Erfindung betrifft eine Vorrichtung zum Temperieren von Räumen eines Gebäudes mit Fassadenwänden, die ein Gerüst aus Stützen und Riegeln umfassen, an denen Fassadenelemente und Fensterflächen im wesentlichen frei von Wärmebrücken angebracht sind, wobei die Stützen und Riegel ein Rohrrahmenregister für einen Heizwasservolumenstrom bzw. Kühlwasservolumenstrom bilden.

Durch die DE-PS 26 21 186 ist eine derartige Vorrichtung bekannt. Wenn für ein Gebäude mit einer derartigen Fassade keine zusätzliche Klimatisierung vorgesehen wird und die Frischluftzufuhr insbesondere über zu öffnende Fenster erfolgt, ist die Erreichung und Aufrechterhaltung eines behaglichen Raumklimas problematisch. Die Fensterlüftung bringt im Sommer warme und im Winter kalte Außenluft in den Raum. Diese Luft muß nachgekühlt bzw. nachgewärmt werden. Wenn weiterhin an derartigen Fassaden kein äußerer Sonnenschutz vorgesehen wird, sondern nur ein innerer Blendschutz, kann bei extremen Außentemperaturen in den Sommermonaten die Raumtemperatur ansteigen und das Raumklima unbehaglich gestalten. Die Kühlleistung einer derartigen integrierten Fassade reicht in den Sommermonaten nicht aus, sondern wird nur etwa zur Hälfte gedeckt. Um die Behaglichkeit zu steigern und die Raumtemperatur an heißen Tagen abzusenken und an sehr kalten Tagen zu erhöhen, sind zusätzliche Maßnahmen erforderlich.

Der Erfindung liegt die Aufgabe zugrunde, eine Vorrichtung zu schaffen, in welcher die Temperierung von Räumen in einem Gebäude mit einer integrierten Fassade ohne aufwendige Klimaanlage möglich ist.

Die Lösung dieser Aufgabe wird erfindungsgemäß dadurch erreicht, daß im Brüstungsbereich der Fensterflächen ein Querstromgebläse angeordnet ist und daß die durch das Gebläse angesaugte Raumluft im Fensterbereich wieder an den Raum abgegeben wird. Durch die Zwangsführung von Raumluft an einer von einem Kühl- oder Heizmedium erwärmten Element vorbei, erfolgt eine zusätzliche Kühlung oder Erwärmung. Da nur Luft aus dem Raum dazu verwendet wird, erfolgt eine relativ rasche Temperaturangleichung.

Vorzugsweise ist über dem Querstromgebläse ein Sternrippenrohr für den Durchfluß eines Kühl- oder Heizmediums angeordnet. Gemäß einer weiteren Ausführungsform ist über dem Quergebläse ein Brüstungsriegel für den Durchfluß eines Kühl- oder Heizmediums vorgesehen. Ein derartiger Brüstungsriegel ist vorzugsweise dreiteilig ausgebildet, wobei zwei Teile mit Lamellen und Durchgangsöffnungen versehen sind. Die Lamellen können dabei kammartig ineinandergreifen und die Durchgangsöffnungen können als Bohrungen oder Langschlitze ausgebildet sein. Durch die Anordnung eines Sternrippenrohres oder eines mehrteiligen, mit Lamellen und Durchgangsöffnungen versehenen Querriegels kann infolge der großen Oberfläche ein wirksamer Wärmeübergang von der Luft auf das durch das Rohr oder den Riegel fließende Medium oder umgekehrt erfolgen. Dadurch erfolgt eine Temperierung der Raumluft.

Die Abgabe der durch das Querstromgebläse geführten Luft an das Rauminnere kann über Auslaßschlitze erfolgen, welche in den Brüstungsriegeln, in den Fassadenstützen oder in den Stutzriegeln vorgesehen sind. Die Führung der Luft erfolgt dabei über Luftkanäle in den Fassadenelementen. An den Verbindungsstellen von Querriegel und Fassadenstützen sind entsprechende Aussparungen gebildet, durch welche die Luft geleitet werden kann.

Um keine Zirkulation von Staub oder Bakterien in dem Raum zu erzeugen, kann in Ausgestaltung der Erfindung im Ansaugbereich vor dem Querstromgebläse ein Filter angeordnet sein. Die Luftumwälzmenge pro Querstromgebläse kann im Bereich von 50 bis 100 m$^3$ pro Stunde liegen. Ferner kann für jedes Fassadenelement, das beispielsweise aus einer zwischen zwei Fassadenpfosten vorgesehenen Fensterfläche und einem Paneel aufgebaut ist, ein Regelventil, ein Temperaturfühler mit Regler und ein Umschaltrelais von Warm- auf Kaltwasser vorgesehen sein.

Gemäß einer weiteren Ausführungsform kann vorgesehen sein, daß im Gebäudeinneren an Stützen und Riegeln ein Rohrrahmenregister angeordnet ist, und daß in diesem Rohrrahmenregister die wasser- und luftführenden Kanäle vorgesehen sind. Vorzugsweise verlaufen die Vertikalprofile des Rohrrahmenregisters dabei von der Oberkante Fußboden bis Unterkante Decke, wobei die Decke auch abgehängt sein kann. Dieses vorgesetzte Rohrrahmenregister ist damit nicht stockwerkshoch. Der Abstand der Vertikalteile des Registers und die Länge der Horizontalteile werden dabei auf Achsmaßbreite festgelegt.

Gemäß einer bevorzugten Ausführungsform kann das Rohrrahmenregister mit den Fassadenelementen verschraubt oder auch die Fassadenelemente aufgeklemmt sein. Dazu können an den Fassadenelementen angepreßte oder angeschraubte Schenkel angeordnet sein. Durch diese Anordnung kann das Rohrrahmenregister jederzeit demontiert werden, was insbesondere zur Reparatur von Leckstellen von Vorteil ist. Weiterhin ist es möglich, vorhandene Fassaden mit einem derartigen Rohrrahmenregister mit einem integrierten Querstromventilator für die Heizung, Kühlung und Lüftung zu versehen.

Ausführungsbeispiele der Erfindung werden anhand der Zeichnung erläutert. Es zeigen:

Fig. 1    schematisch eine Vorderansicht mehrerer nebeneinander angeordneter Fassadenelemente eines Stockwerks eines Gebäudes,

Fig. 2    eine vergrößerte Ansicht eines Fassadenelementes,

Fig. 3    einen Vertikalschnitt durch ein Stockwerk eines Gebäudes gemäß der Linie III-III von Fig. 2,

Fig. 4-6      verschiedene Ausführungsformen für die Führung
              der temperierten Luft,

Fig. 7        einen Schnitt gemäß der Linie VII-VII von Fig. 2,

Fig. 8        einen Vertikalschnitt analog Fig. 3 durch zwei
              Ausführungsformen,

Fig. 9-11     Darstellungen analog Fig. 4-6 der Luftführung
              der Ausführungsform nach Fig. 8,

Fig. 12       im vergrößerten Maßstab Teile eines Vertikalschnitts nach Fig. 3,

Fig. 13       im vergrößerten Maßstab Teile eines Vertikalschnitts nach Fig. 8,

Fig. 14       einen Vertikalschnitt analog Fig. 12,

Fig. 15       einen Vertikalschnitt analog Fig. 13 und

Fig. 16       einen Horizontalschnitt durch eine Fassadenstütze mit vorgesetztem Rohrrahmenregister.

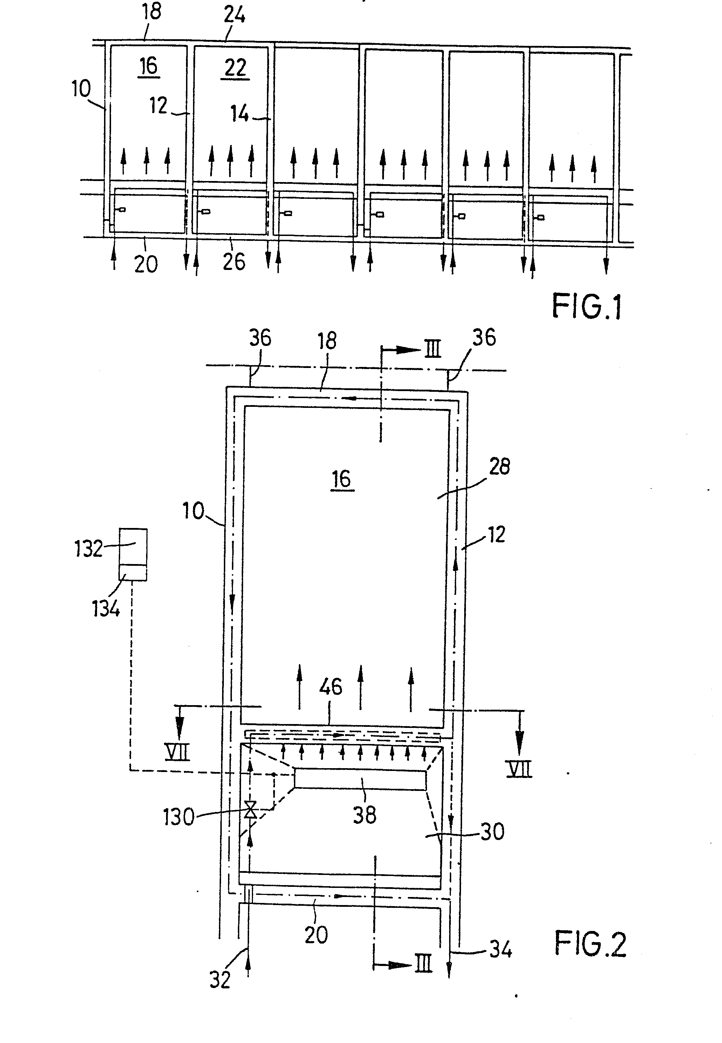

Die in Fig. 1 gezeigten Funktionsfelder einer Fassade bestehen aus im Abstand voneinander angeordneten Abschnitten von Hohlstützen 10, 12 und 14. Die erste Fassadenfläche 16 wird von den Hohlstützen 10 und 12 und den Querriegeln 18 und 20 gebildet. Die zweite Fassadenfläche 22 wird von den Hohlstützen 12 und 14 und den Querriegeln 24 und 26 begrenzt.

Fig. 2 zeigt die Fassadenfläche 16 in vergrößertem Maßstab. Die kälte- oder wärmebrückenfreien Hohlstützen 10 und 12 und die Hohlriegel 18 und 20 sind zu einem Rohrrahmenregister zusammengebaut und nehmen zu öffnende Fensterflügel 28, die beispielsweise eine Isolierverglasung aufweisen, und Brüstungspaneele 30 auf. In den Hohlstützen 10, 12 und den Hohlriegeln 18, 20 sind Kanäle vorgesehen, durch die ein Heizwasservolumenstrom bzw. Kühlwasservolumenstrom in festgelegter Reihenfolge über eine Vorlaufleitung 32 und eine Rücklaufleitung 34 die Stützen und Riegel durchströmt und die Beheizung oder Kühlung des Gebäudeinneren vornimmt. An dem oberen Querriegel 18 kann eine Entlüftungsvorrichtung 36 angeordnet sein. Die Wärmeleistung eines derartigen Rohrrahmenregisters eines Fassadenfeldes reicht aus, um die gesamten Transmissionsverluste einschließlich des Lüftungswärmebedarfs eingebauter Drehkippflügel zu decken. Die Kühlleistung einer derartigen Fassade reicht aber in den Sommermonaten nicht aus, um ein behagliches Raumklima im Inneren
des Gebäudes zu schaffen.

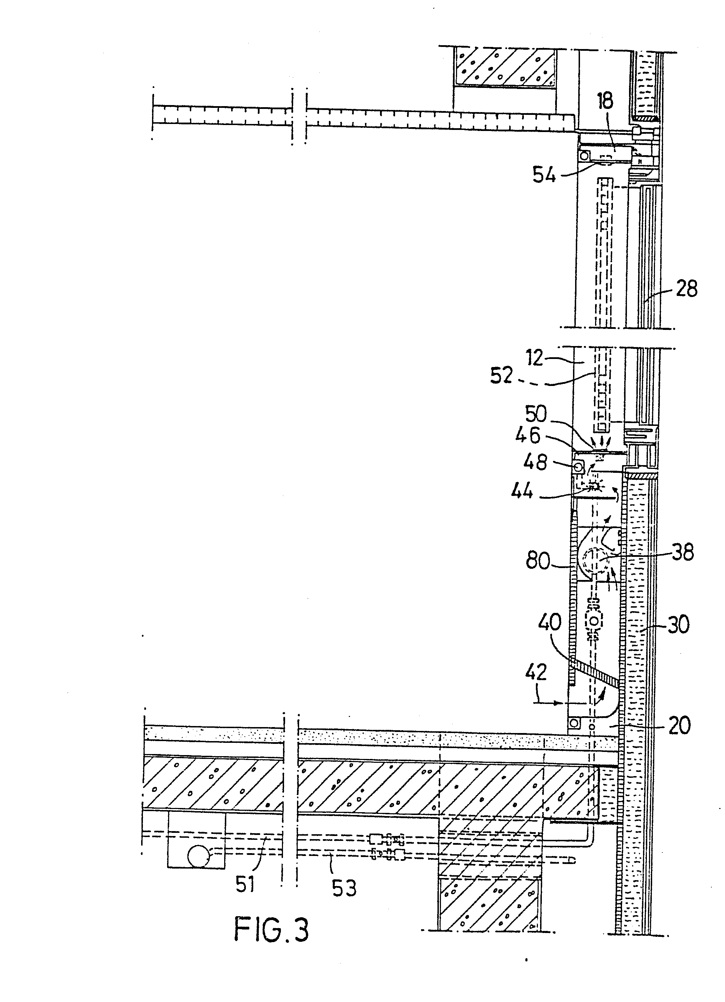

Um die Behaglichkeit zu steigern und die Raumtemperatur
an heißen Tagen abzusenken und an sehr kalten Tagen zu erhöhen, ist im Brüstungsbereich pro Fassadenelement einer
derartigen Fassadenkonstruktion ein Querstromgebläse 38
angeordnet. Wie insbesondere aus Fig. 3 zu ersehen ist,
ist unter dem Querstromgebläse 38 ein Filter 40 angeordnet,
durch welches Raumluft wie mit Pfeil 42 angedeutet aus dem
unteren Bereich des Rahmens angesaugt wird. Die Luft wird
oberhalb des Querstromgebläses um ein Element herumgeführt,
welches von einem Kühl- oder Wärmmedium durchflossen ist.
Bei der in Fig. 3 gezeigten Ausführungsform ist über dem
Querstromgebläse 38 ein Sternrippenrohr 44 angeordnet,
welches sich unterhalb eines Brüstungsriegels 46 erstreckt.
Das Sternrippenrohr 44 wird im Sommer beispielsweise von
gekühltem Wasser durchflossen. Der Brüstungsriegel weist
einen Kanal 48 auf, durch welchen ebenfalls Kühlwasser
fließen kann. Im Winter bei kühler Raumtemperatur fließt
anstelle des Kühlwassers erwärmtes Wasser durch das Rippenrohr bzw. den Kanal 48 des Brüstungsriegels. Mit 51 ist eine
Vorlaufleitung und mit 53 eine Rücklaufleitung für das
durch das Sternrippenrohr 44 und den Kanal 48 fließende
Kühl- bzw. Warmwasser bezeichnet.

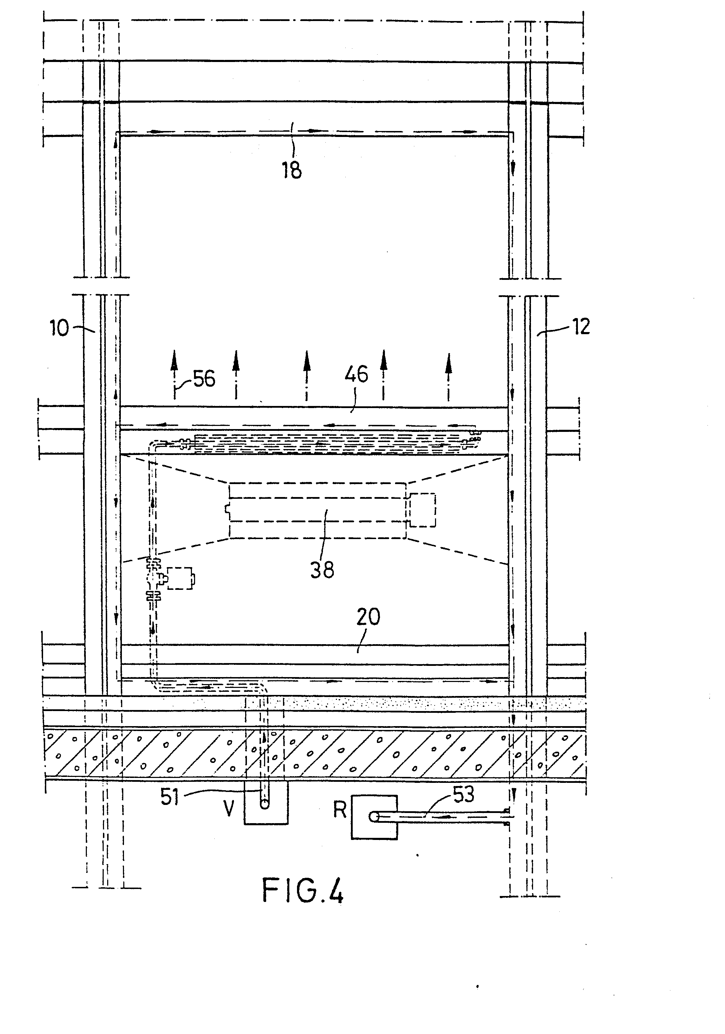

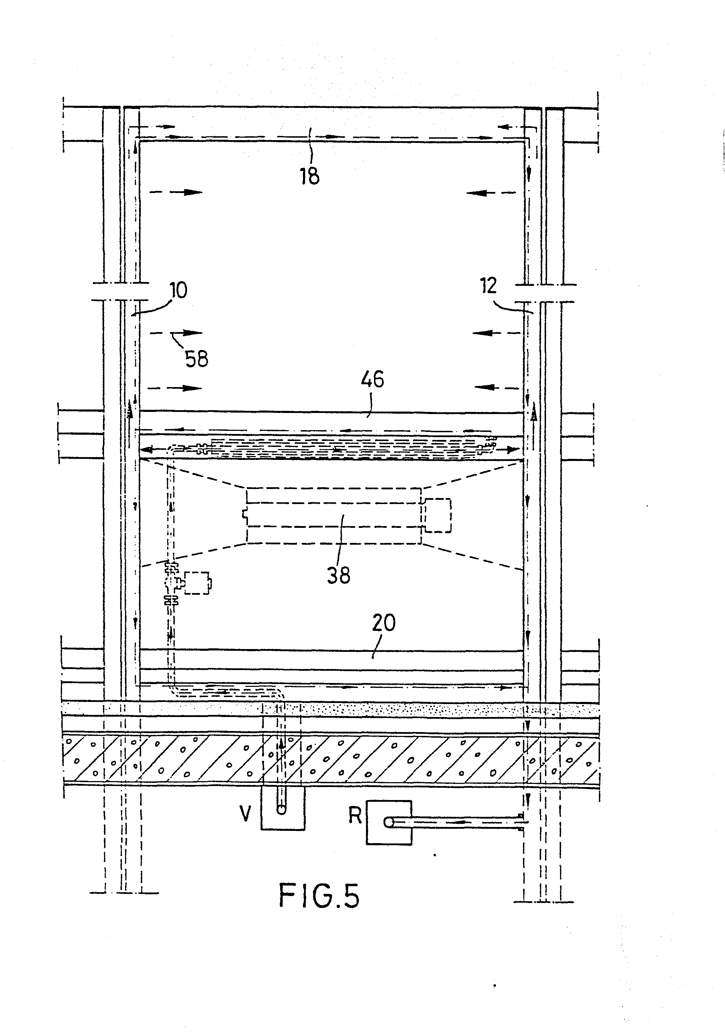

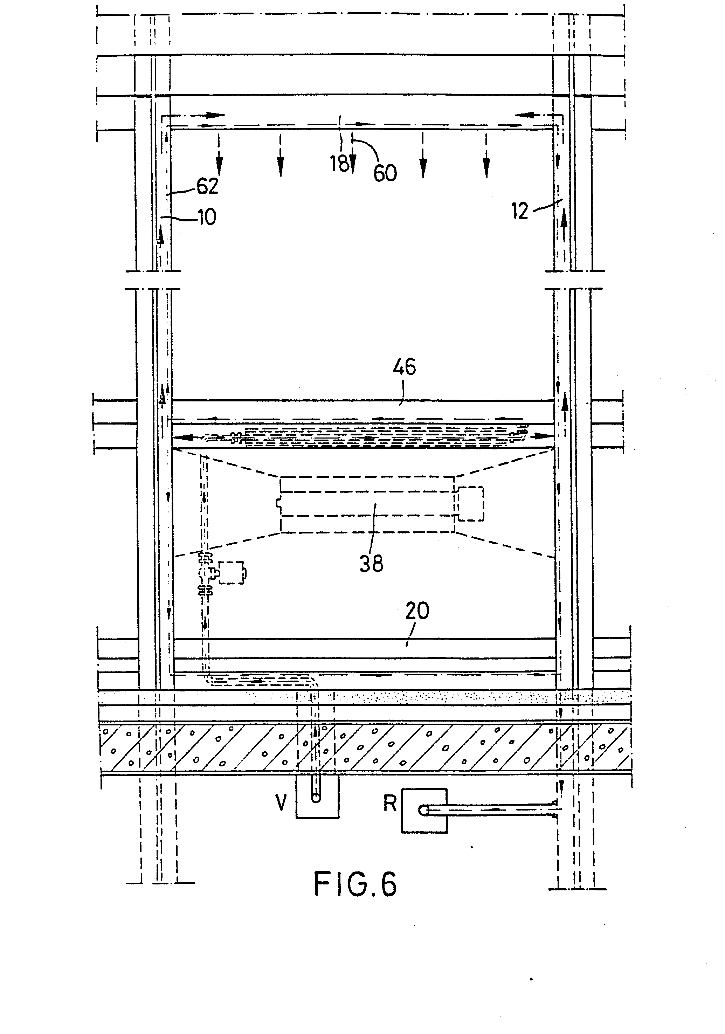

Die an dem Sternrippenrohr 44 und in dem Brüstungsriegel 46
vorgekühlte oder vorerwärmte Luft kann entweder in Brüstungshöhe aus dem Brüstungsriegel 46 austreten (Fig. 4) oder
seitlich aus den Fassadenpfosten 10, 12 (Fig. 5) oder aus
dem Sturzriegel 18 (Fig. 6). Die Fassadenstützen 10, 12,
der Brüstungsriegel 46 und der Sturzriegel 18 sind dazu
mit Luftkanälen ausgebildet. In Fassadenpfosten 10, 12 sind
im Bereich der Anschlüsse der Querriegel 18 und 46 Aussparungen für die Luftführung vorgesehen. Für den Austritt der Luft sind in dem Brüstungsriegel 46 Austrittsöffnungen 50, in den Hohlstützen Austrittsöffnungen 52 und im Sturzriegel 18 Austrittsöffnungen 54 vorgesehen. Die austretende Luft ist durch Pfeile 56, 58 bzw. 60 schematisch angedeutet. Innerhalb der Hohlstützen 10, 12 und dem Sturzriegel 18 ist ein Kanal 62 für das Kühl- oder Heizmedium der Fassadenfläche angeordnet.

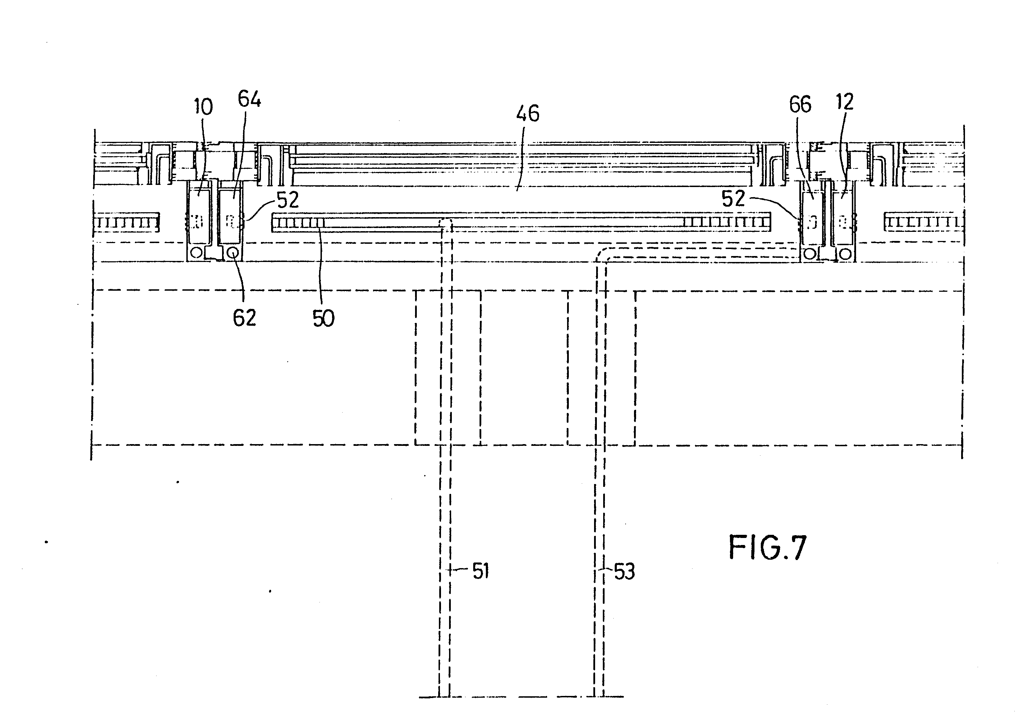

Fig. 7 zeigt einen Schnitt durch die Hohlstützen 10, 12 und eine Draufsicht auf den Brüstungsriegel 46. In den Stützen 10 und 12 ist die Leitung 62 für die Beheizung des Fassadenelementes zu ersehen und die Kanäle 64 bzw. 66 zur Führung der vorgekühlten oder erwärmten, durch das Querstromgebläse geführten Luft.

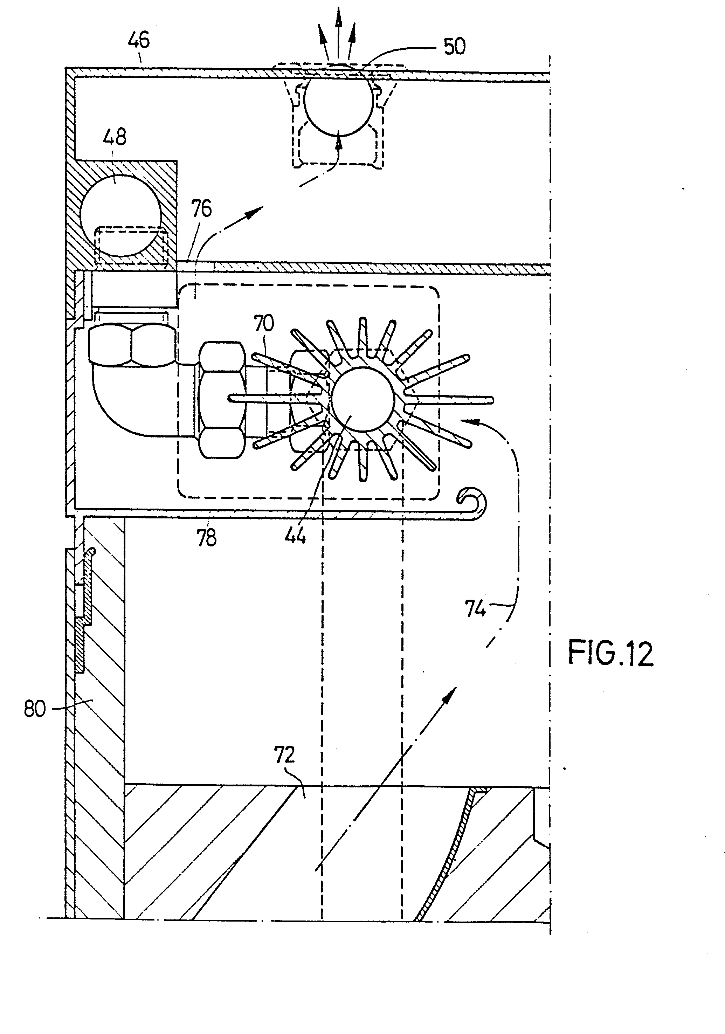

Fig. 12 zeigt in vergrößerter Darstellung einen Querschnitt durch das Sternrippenrohr 44. Durch die sternförmig abragenden Rippen 70 wird eine starke Vergrößerung der Oberfläche erreicht. Die aus dem Ableitungskanal 72 strömende Luft, die durch den Pfeil 74 angedeutet ist, streicht an den Rippen 70 des Sternrippenrohres 44 vorbei und gelangt durch Öffnungen 76 an der Unterseite des Brüstungsriegels 46 entweder in die Hohlstützen und von da eventuell in den Sturzriegel oder direkt durch die Auslaßöffnung 50 vor der Fensterfläche in den Raum zurück. Da der Brüstungsriegel 46 in dem Kanal 48 ebenfalls von Kühl- bzw. Warmwasser durchflossen wird, erfolgt auch im Brüstungsriegel 46 eine Kühlung bzw. Erwärmung der Luft 74. Ein Leitblech 78 unterhalb des Sternrippenrohres sorgt dafür, daß die Luft 74 tatsächlich über die Rippen 70 geleitet wird. Eine Verkleidung 80, die vor dem Querstromgebläse angeordnet ist, verhindert ein Austreten der Luft über dem Querstromgebläse, bevor sie an dem Kühlrippenrohr vorbeigeleitet worden ist und sichert, daß die gesamte Luft durch den unter dem Querstromgebläse angeordneten Filter strömt.

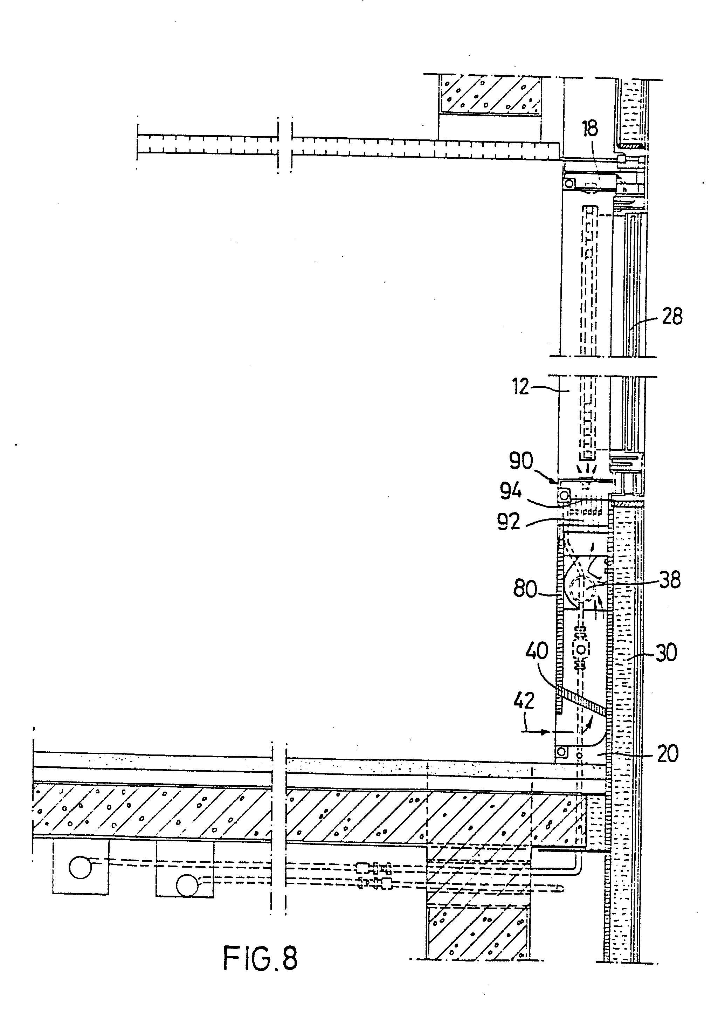

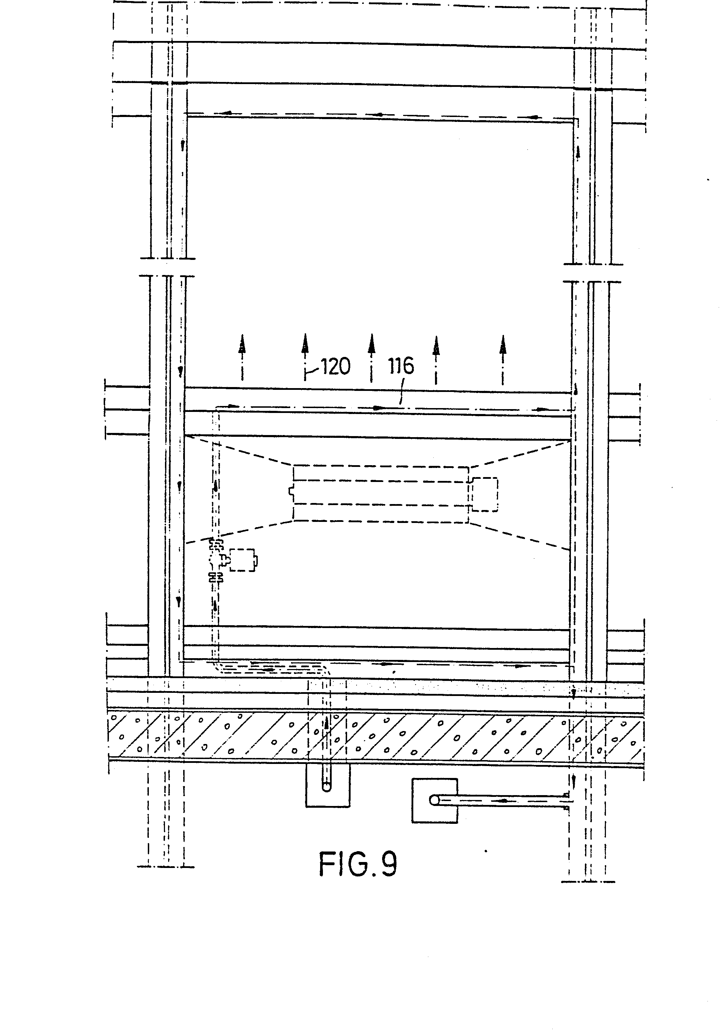

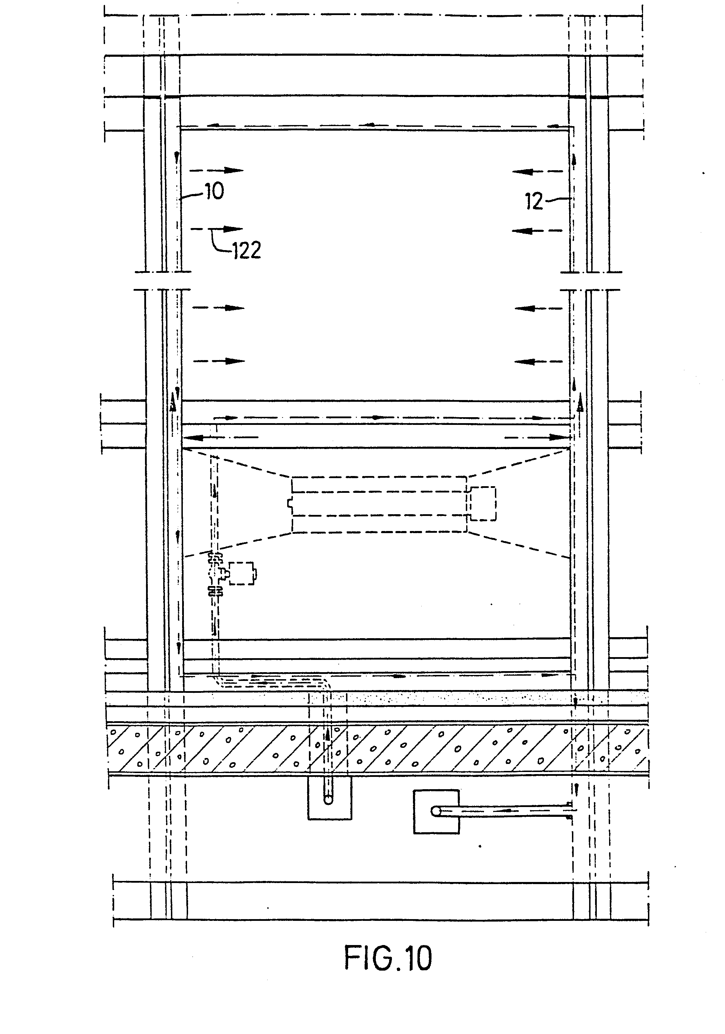

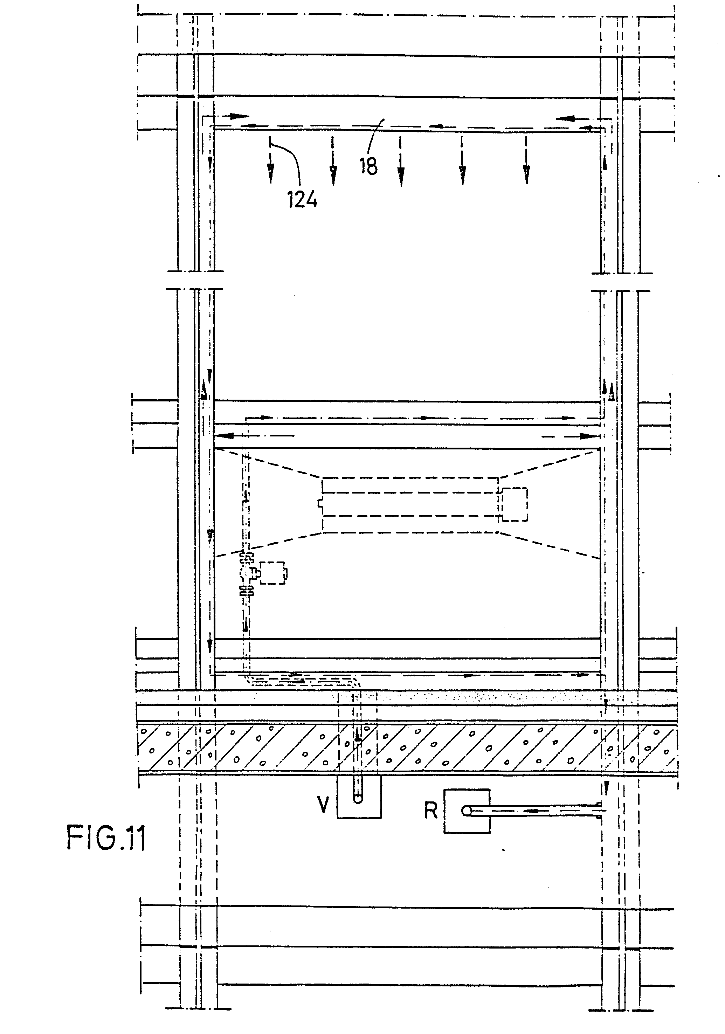

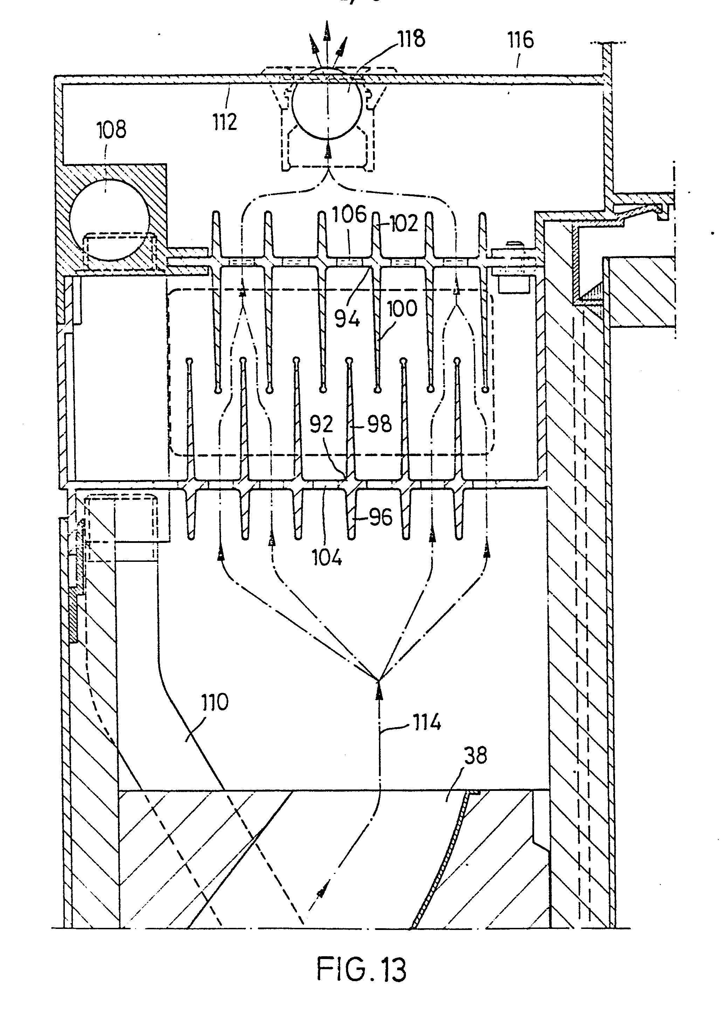

Fig. 8 zeigt einen Schnitt analog Fig. 3. Dieses Ausführungsbeispiel entspricht im Aufbau dem Ausführungsbeispiel nach Fig. 3 mit der Ausnahme, daß anstelle eines Sternrippenrohres ein aus drei Teilen zusammengesetzter Brüstungsriegel 90 angeordnet ist. Dieser beispielsweise aus Aluminium bestehende Brüstungsriegel weist zwei Profilteile 92, 94 auf, welche angepreßte Lamellen 96 und 98 bzw. 100 und 102 aufweisen. Die Lamellen 98 und 100 greifen dabei kammartig ineinander. Zwischen den Lamellen sind im unteren Profil 92 Durchgangsöffnungen 104 und im oberen Profil 94 Durchgangsöffnungen 106 ausgebildet. Diese Durchgangsöffnungen können kreis- oder schlitzförmig sein. Das dritte Brüstungsriegelteil ist an der Oberseite vorgesehen und weist einen Kanal 108 für das Kühl- oder Heizmedium auf. Die Zuleitung zu diesem Kanal erfolgt über eine Leitung 110. Durch die durch den Kanal 108 strömende Kühl- bzw. Heizflüssigkeit werden die Brüstungsriegelprofilteile 92, 94 und 112 gekühlt bzw. erwärmt. Die an den Profilteilen 92 und 94 ausgebildeten Lamellen und insbesondere die kammartig ineinandergreifenden Lamellen 98 und 100 erbringen eine große wirksame Oberfläche. Die durch das Querstromgebläse 38 zugeführte Luft 114 strömt durch die Öffnungen 104 im unteren Profilteil 92 an den Lamellen 96 und 98 vorbei, um dann auf ihrem Weg durch die Lamellen 100 eingeschnürt zu werden, bevor sie durch die Öffnungen 106 in den oberen Brüstungsriegelkanal 116 gelangt. Von dort aus kann dann die Luft entweder durch Kanäle in den Hohlstützen bis in den Sturzriegel geführt werden, um entweder seitlich aus den Hohlstützen oder von oben aus dem Sturzriegel auszutreten. Die gekühlte oder erwärmte Luft kann aber auch direkt durch Öffnungen 118 im Brüstungsriegel an den Raum abgegeben werden. Fig. 9 zeigt die Ausführungsform nach Fig. 8 und 13 mit dem dreiteiligen Brüstungsriegel, bei welchem die Luft 120 aus dem Brüstungsriegel 116 austritt. Bei der in Fig. 10 gezeigten Ausführungsform tritt die Luft 122 seitlich aus dem Hohlstützen 10 und 12 aus und bei der in Fig. 11 gezeigten Ausführungsform tritt Luft 124 oben aus dem Sturzriegel 18 in den Raum.

Für jedes beispielsweise aus zwei Hohlstützen, einem Sturzriegel, einem Brüstungsriegel, einem unteren Querriegel, einer Fensterfläche und einem Paneel bestehenden Fassadenelement ist ein Regelventil 130, ein Temperaturfühler mit Regler 132 und ein Umschaltrelais 134 zum Umschalten von Warm- auf Kaltwasser vorgesehen. Bei diesem Zweileitersystem, das umschaltbar ist auf Warm- oder Kaltwasser, erfolgt die Regelung in der ersten Sequenz als Regelung der Leistung der integrierten Fassade und in der zweiten Sequenz durch Einschalten des Querstromventilators. Für das Warmwassersystem ist ein Überstromventil notwendig.

Wenn bei einer derartigen Fassade in den Sommermonaten während der Kühlperiode die Raumlufttemperatur bei ca. 26° C gehalten werden soll und wenn die Kühlwassereintrittstemperatur mit 17° C zugrundegelegt wird und die Kühlwasseraustrittstemperatur 19° C annehmen kann, beträgt die mittlere Kühlwassertemperatur ca. 18° C. Dem Taupunkt von 17° C entspricht dann eine Raumluftfeuchtigkeit von 65 % und 55 % bei einer Raumlufttemperatur zwischen 24° C bis 26° C. Damit der Taupunkt nicht unterschritten wird, überwacht ein Spezialfühler die Kühlwassereintrittstemperatur. Um eine Raumtemperatur von ca. 26° C bei einer Außentemperatur von ca. 32° C halten zu können, ist eine Luftumwälzmenge pro Querstromventilator von ca. 62 bis 68 $m^3$ pro Stunde erforderlich.

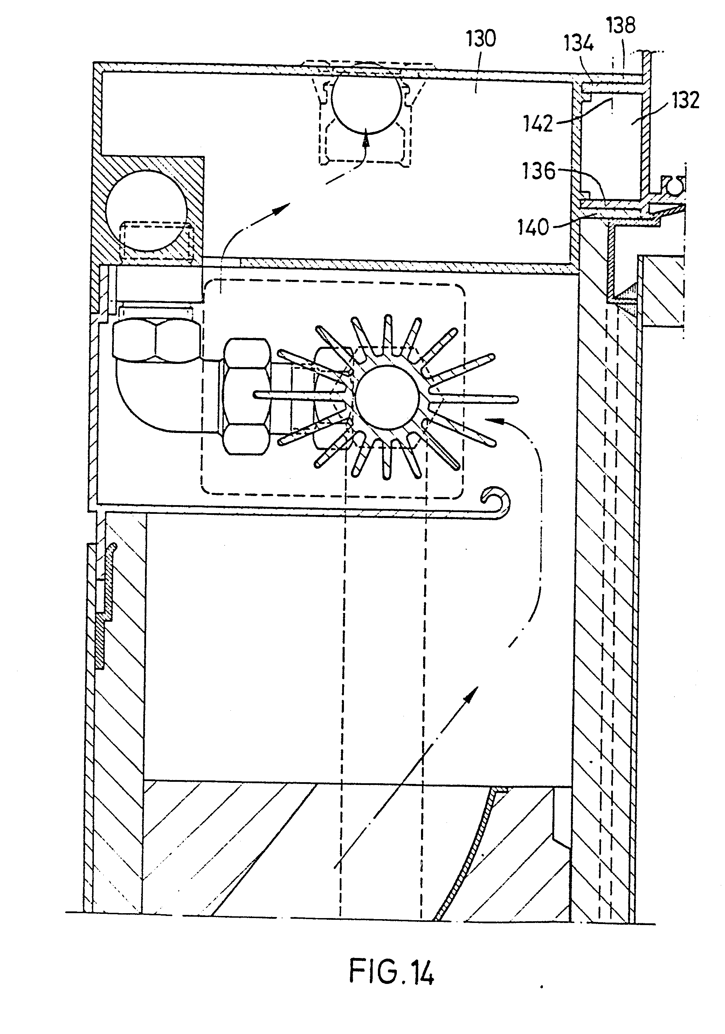

Fig. 14 zeigt eine Darstellung analog Fig. 12. Die Ausbildung des Sternrippenrohres und der Luftführung entspricht der in Fig. 12 gezeigten, so daß darauf nicht näher eingegangen werden muß. Im Unterschied zu der in Fig. 12 gezeigten Ausführungsform ist aber kein einstückig ausgebildeter Brüstungsriegel vorgesehen, sondern der Brüstungsriegel teilt sich in einen inneren Teil 130 und einen äußeren Teil 132 auf, wobei der innere Teil 130 auf den äußeren Teil 132 aufgesteckt und verschraubt ist. Dazu sind an dem Teil 132 Schenkel 134 und 136 vorgesehen, die an der Innenseite von Schenkeln 138 und 140 an dem Teil 130 zur Anlage kommen. Durch Lösung einer Verschraubung 142 ist es möglich, das Brüstungsriegelteil 130 abzunehmen, so daß eventuelle Leckstellen behoben werden können. Die Schenkel 134 und 136 können an dem Brüstungsriegelteil 132 angepreßt sein, sie können aber auch angeschraubt sein, so daß nachträglich ein Brüstungsriegelteil 130 angebracht werden kann.

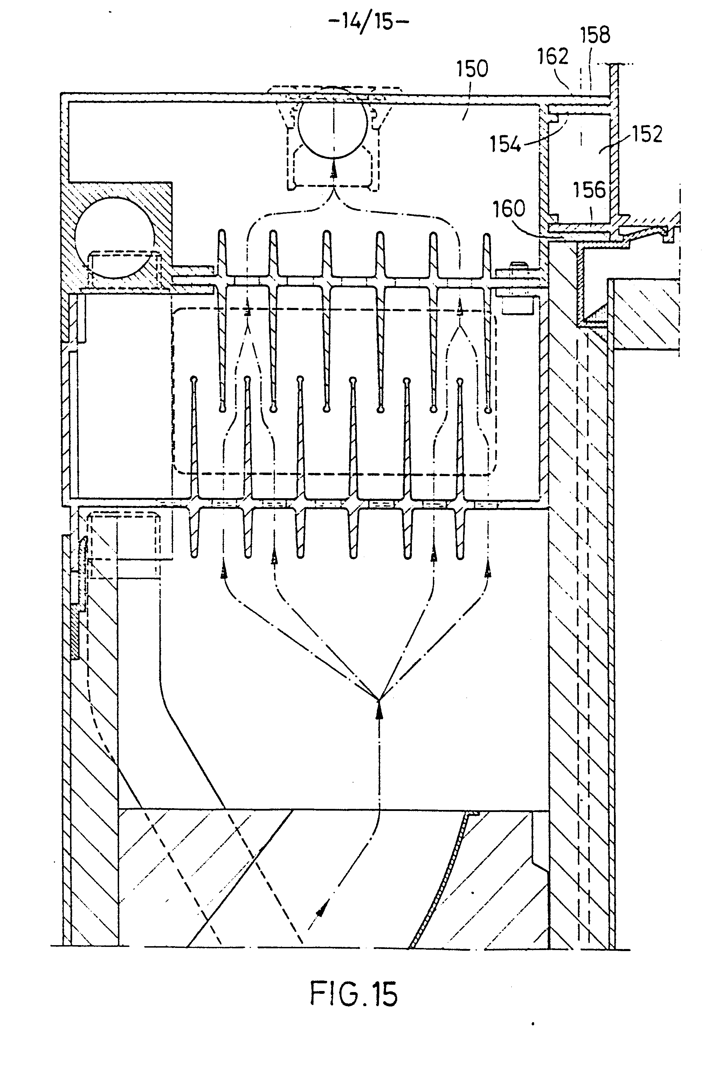

Der in Fig. 15 gezeigte Brüstungsriegel besteht aus einem inneren Teil 150 und einem äußeren Fassadenriegel 152. An dem Brüstungsriegel 152 sind Schenkel 154 und 156 entweder angepreßt oder angeschraubt, welchen Schenkeln 158 und 160, die an dem Brüstungsriegelteil 150 angeformt sind, als Anlage dienen. Verbunden sind die Teile 150 und 152 durch eine lösbare Verschraubung 162, so daß das Teil 150 nachträglich angebracht bzw. zu Reparaturen von dem Fassadenriegel 152 entfernt werden kann.

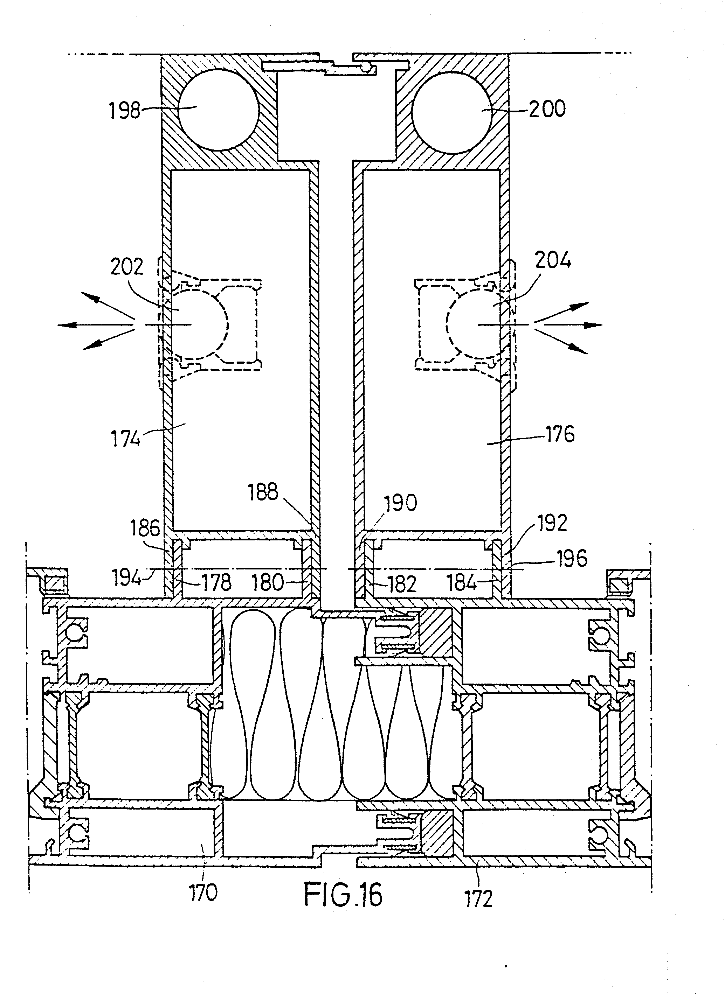

Auf die in Fig. 16 gezeigten Fassadenstützen 170 und 172 sind Vertikalelemente 174 und 176 eines Rohrrahmenregisters angebracht. Dazu sind an der Stütze 170 Schenkel 178 und 180 und an der Stütze 172 Schenkel 182 und 184 entweder angepreßt oder angeschraubt. Diese Schenkel dienen der Anlage von Schenkeln 186 und 188, die an dem Vertikalelement 174 angeformt sind, und Schenkeln 190 und 192, die an dem Vertikalelement 176 angeformt sind.

Die Verbindung des Vertikalelements 174 mit der Stütze 170 erfolgt über eine Verschraubung 194 und die entsprechende Verbindung des Vertikalelements 176 mit der Stütze 172 über eine Verschraubung 196. In den Vertikalelementen 174 und 176 sind Kanäle 198 bzw. 200 für das Heiz- oder Kühlwasser und Kanäle 202 bzw. 204 für die durch das Querstromgebläse geförderte Luft vorgesehen. Kanäle 202 und 204 sind mit entsprechenden Austrittsöffnungen für die Luft ausgebildet. Auch die Vertikalelemente 174 und 176 können nachträglich an den Stützen 170 und 172 angebracht werden, und sie können von den Stützen entfernt werden, um eventuelle Reparaturen oder Veränderungen vorzunehmen.

Josef Gartner & Co., Postfach 20/40, 8883 Gundelfingen

Vorrichtung zum Temperieren von Räumen eines Gebäudes

Patentansprüche

1. Vorrichtung zum Temperieren von Räumen eines Gebäudes mit Fassadenwänden, die ein Gerüst aus Stützen und Riegeln umfassen, an denen Fassadenelemente und Fensterflächen im wesentlichen frei von Wärmebrücken angebracht sind, wobei die Stützen und Riegel ein Rohrrahmenregister für einen Heizwasservolumenstrom bzw. Kühlwasservolumenstrom bilden, dadurch g e k e n n z e i c h n e t , daß im Brüstungsbereich der Fensterflächen ein Querstromgebläse (38) angeordnet ist und daß die durch das Gebläse angesaugte Raumluft im Fensterbereich wieder an den Raum abgegeben wird.

2. Vorrichtung nach Anspruch 1, dadurch g e k e n n - z e i c h n e t , daß über dem Querstromgebläse (38) ein Sternrippenrohr (44) für den Durchfluß eines Kühl- oder Heizmediums angeordnet ist.

3. Vorrichtung nach Anspruch 1 oder 2, dadurch g e k e n n - z e i c h n e t , daß über dem Querstromgebläse (38) ein Brüstungsriegel (46) für den Durchfluß eines Kühl- oder Heizmediums vorgesehen ist.

4. Vorrichtung nach Anspruch 1, dadurch g e k e n n - z e i c h n e t , daß über dem Querstromgebläse (38) ein mehrteiliger Brüstungsriegel (90) angeordnet ist, daß zwei Teile (92, 94) des Brüstungsriegels (90) mit Lamellen (96; 98, 100, 102) ausgebildet sind und daß die Lamellenprofile (92, 94) mit Durchgangsöffnungen (104, 106) versehen sind.

5. Vorrichtung nach Anspruch 4, dadurch g e k e n n - z e i c h n e t , daß die Lamellen (98, 100) kammartig ineinandergreifen.

6. Vorrichtung nach einem der Ansprüche 1 bis 5, dadurch g e k e n n z e i c h n e t , daß in dem Brüstungsriegel (46) Luftkanäle mit Auslaßschlitzen (50, 118) und/oder in den Fassadenstützen (10, 12) Luftkanäle (64, 66) mit Auslaßschlitzen (52) und/oder in dem Sturzriegel (18) ein Luftkanal mit Auslaßschlitzen (54) vorgesehen sind.

7. Vorrichtung nach Anspruch 6, dadurch g e k e n n - z e i c h n e t , daß im Bereich der Querriegelanschlüsse Aussparungen für die Luftführung vorgesehen sind.

8. Vorrichtung nach einem der Ansprüche 1 bis 7, dadurch g e k e n n z e i c h n e t , daß im Ansaugbereich ein Filter (40) vor dem Querstromgebläse (38) angeordnet ist.

9. Vorrichtung nach einem der Ansprüche 1 bis 8, dadurch g e k e n n z e i c h n e t , daß für jedes Fassaden- element ein Regelventil (130), ein Temperaturfühler mit Regler (132) und ein Umschaltrelais (134) von Warm- auf Kaltwasser vorgesehen ist.

10. Vorrichtung nach einem der vorhergehenden Ansprüche, dadurch g e k e n n z e i c h n e t , daß im Gebäude- inneren an den Stützen und Riegeln ein Rohrrahmenregister angeordnet ist, daß in diesem Rohrrahmenregister die wasser- und luftführenden Kanäle vorgesehen sind und daß die Vertikalprofile des Rohrrahmenregisters von der Oberkante Fußboden bis Unterkante Decke verlaufen.

FIG.1

FIG.2

FIG.3

FIG.4

FIG.5

FIG.6

FIG.7

0132723

FIG.8

FIG.9

G 326

FIG.10

G 326

-10/15-

FIG.11

FIG.12

0132723

G.3263

FIG.13

FIG.14

FIG.15

FIG.16